# EUROPEAN PATENT SPECIFICATION

(11) **EP 1 118 728 B1**
(45) Date of publication and mention of the grant of the patent: **26.05.2004**
(21) Application number: 01830018.6
(22) Date of filing: 15.01.2001
(51) Int. Cl.: E04B 2/74, A47B 96/14

(54) **Supporting structure for partitions, shelves and similar items**
Tragestruktur für Trennwände, Regale oder dergleichen
Structure de support pour cloisons, étagères et similaire

(30) Priority: 18.01.2000 IT AN200001
(43) Date of publication of application: 25.07.2001
(73) Proprietor: Vilardi Marketing SAS di Vilardi Pasquale & C., 62019 Recanati (MC) (IT)
(72) Inventor: Vilardi, Pasquale, 62019 Recanati (MC) (IT)
(74) Representative: Baldi, Claudio, Ing.

(56) References cited:
- EP-A- 0 163 455
- EP-A- 0 292 833
- DE-A- 2 100 874
- DE-U- 29 612 059
- US-A- 3 086 627
- US-A- 5 291 708
- US-A- 5 484 068

## Description

The present patent application relates to a supporting structure for partitions and other furniture items, such as shelves, tops and similar items.

In particular, the structure according to the present invention is designed to provide better support for the partitions that are often used to separate areas or working stations.

Currently, similar panels are often mounted using metal perimeter frames (that is mouldings); in other cases the different sections of the panels are simply connected one next to the other.

To that end, a metal profile with a longitudinal dove-tail groove is mounted on the lateral border of each panel section.

To join two consecutive sections of the partition panels, two metal profiles mounted on the entire height of the lateral borders are placed one against the other one. The two metal profiles are joined together by means of a special metal strip having the same height as the metal profiles mounted on the lateral borders of the panels to be connected, which features a transversal double dove-tail section.

The dove-tail section allows the strip to penetrate half way into the longitudinal groove of the metal profile mounted on the right side panel and half way into the groove of the metal profile on the left side, thus preventing disassembling.

The two technologies used to support partitions as illustrated above, however, have some disadvantages: apart from being quite expensive, the metal perimeter frames weigh down the partition wall obtained with multiple wooden panels.

As regards the "self-standing" panels, it must be said that, apart from being precarious, the main limitation derives from the difficulties involved in assembling them, particularly when inserting the double dove-tail connection strip between two consecutive sections.

The difficulties are increased by the fact that these panels are usually mounted directly in the destination place and the available space is sometimes not sufficient to insert the connection strip comfortably. It is also obvious that the difficulties in handling the connection strip get even bigger when using panels with considerable height, and therefore longer connection strips.

DE-A-2 100 874 discloses a structure primarily for use as a building framework and comprising the features of the preamble of appended claim 1. The shaped strips of this structure can only be removed by sliding them out of one of the ends of the tubular column.

In view of the inconveniences of the prior art, the supporting structure according to the present invention has been designed, which features great functional efficacy, together with an extremely pleasant look characterised by light, clean shapes.

The main element of the structure according to the present invention is a special tubular column with circular section, along which four deep longitudinal grooves are located in radial position at 90° intervals, whose rear part is connected with a duct with circular section centrally located along the entire height of the column.

Each longitudinal groove is laterally bordered by two separators with irregular profile; it being provided that one of the separators has a curvilinear direction delimiting a sort of semicircular niche with the concavity facing the centre of the corresponding groove.

Each groove can exactly house the suitably shaped rear wing of a strip designed to couple the partition border.

The rear wing of the strip presents has a section with curvilinear direction delimiting a sort of semicircular niche that - when the rear wing has been completely inserted inside the corresponding groove - is located exactly in front of the semicircular niche inside the groove, thus forming a duct with circular section along the entire height of the upright column.

It is easy to understand that the stable fitting of the rear wing of the strip with its corresponding destination groove can be obtained by means of two short pins with circular section inserted into the upper and lower end of the duct with circular section formed by them along the entire height of the column, as illustrated above.

As it appears clear from the following description, the insertion of the two pins prevents the uncoupling (that is the occasional release) of the strip designed to support the furniture items from the corresponding groove of the upright column.

Moreover, the two connection pins can be of reduced height and therefore easy to handle and install also in the case of limited space.

Only in case of upright columns with reduced height in order to avoid the same inconveniences as the prior technique, the strip can be coupled with the corresponding groove of the upright column with a pin having the same height as the column, so as to entirely occupy from one end to the other the duct formed between the rear wing of the strip and the groove containing it.

For major clarity the description of the invention continues with reference to the enclosed drawings, which are intended for purposes of illustration and not in a limiting sense, whereby:
- Fig. 1 is a schematic view of the structure according to the present invention used to support a partition having the same height as the upright column;
- Fig. 2 is the section of Fig. 1 with the plane II-II;
- Fig. 3 is the section of the upright column and of two different profiles capable of being coupled and attached to the column;
- Fig. 4 is a view of the support base of the column.

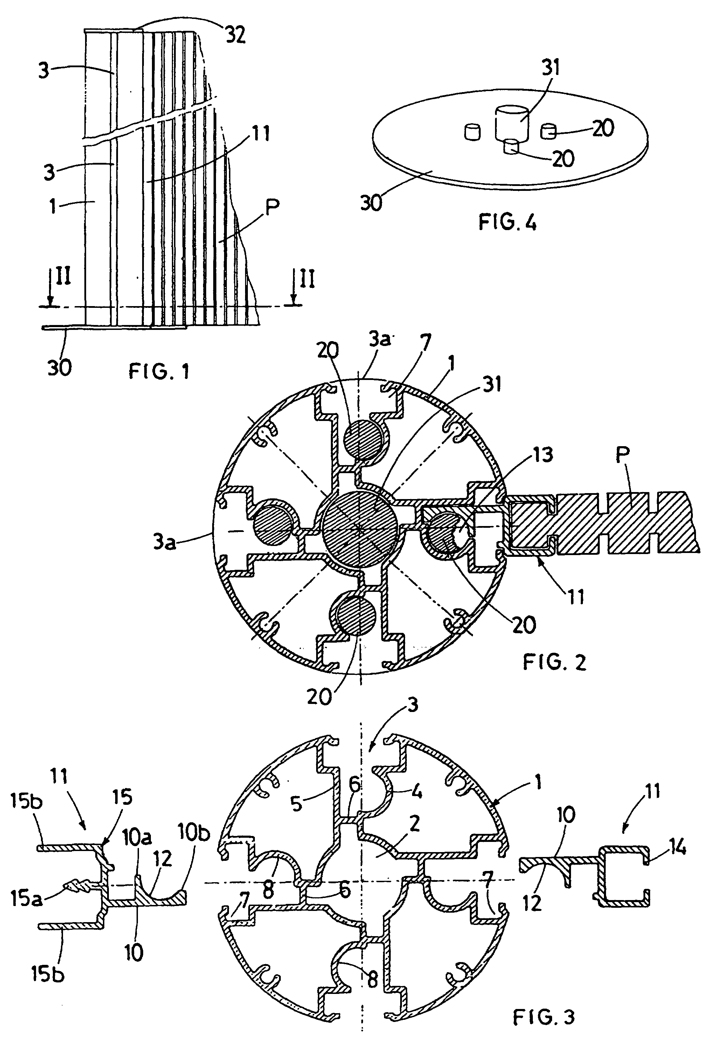

With reference to Figs. 1 and 2, the main element of the structure according to the present invention is a tubular column (1) with circular section, which internally features longitudinal profiles delimiting a central duct (2) with circular section, connected with four regularly spaced radial grooves (3).

In particular, each groove (3) is laterally bordered by two shaped separators (4 and 5) and dosed in the back by a small wall (6) connecting the lateral separators (4 and 5).

On the back of the opening (3a) of the groove (3), the separators (4 and 5) form a sort of box-shaped track (7) with rectangular section.

A semicircular niche (8) is located in deeper position with the concavity facing the inside, obtained thanks to the special shape of the separator (4) that, in Fig. 2, delimits each groove (3) on the left side (looking from the outside towards the inside).

As mentioned earlier, each groove (3) of the column is designed to exactly house the rear wing (10) of a shaped strip (11) whose front part features attachment means for partitions.

With particular reference to Fig. 3, the rear wing (10) has an appendix with crescent-shaped section, with the internal horn (10a) longer than the external horn (10b). Thanks to this configuration, also the rear wing (10) has a semicircular niche (12) along its entire length.

With reference to Fig. 3, the rear wing (10) of the strip (11) is inserted into one of the grooves (3) of the column until its external horn (10b) exactly engages against the bottom wall (6).

The shape of the rear wing (10) is such that, once it has been completely inserted, the semicircular niche (12) is exactly located in front of the corresponding semicircular niche (8) delimited by the separator (4) of the groove (3), co-operating with it in order to create an additional circular duct (13) extending along the entire height of the column (1).

The duct (13) can be used to exactly insert one or more pins (20) with circular section that, once inserted, make it impossible to disengage the rear wing (10) of the strip (11) from the corresponding groove (3) of the column (1 ).

In case of a section of column (1) with limited height, a single pin (20) having the same length as its height can be used to fix each strip (11). In the case of very tall columns, two different pins (20) will be used, the first one inserted in the bottom section of the duct (13) and the second one (suitably provided with enlarged head) inserted in the top section of the duct (13).

The strip (11) can be made in different versions, all of them provided with the rear wing (10), but with different shape in the front part, that is the part designed to remain on the outside of the upright column (1).

The version illustrated in Fig. 2 has a front profile (14) with C-shaped section. The first of a series of parallel stakes of the partition (P) is exactly inserted and engaged in the compartment inside the profile (14).

The version illustrated in Fig. 3 has a front profile (15) with trident section, with a shorter central horn (15a) shaped like a hook. The border of the partition is inserted with pressure in the compartment delimited by the two lateral sections (15b) of the trident, so that the central horn (15a) can be inserted and fitted.

It must be said that the section of the column (1) of the structure according to the present invention is large enough to stand even when directly laid on the floor in vertical position.

However, in order to guarantee better stability, a stand (30) with larger diameter may be used, from which a central pin (31) with circular section protrudes vertically. In this case the column (1) must be vertically laid on the stand (30), so that the central pin (31) of the stand (30) is exactly inserted into the bottom section of the central duct (2) of the column (1).

The stand (30) can advantageously feature four pins (20) capable of being exactly inserted into the bottom sections of the four ducts (13) formed inside the column (1).

Also, the structure according to the present invention has a lid (32) used to exactly close the upright column (1) on top. The lid (31) has a central pin and four peripheral pins, like the stand (30).

Finally, it must be noted that the back of the opening (3a) has a box-shaped track (7) in order to create a fixing housing for plates of known type capable to support brackets, pins or other traditional means used to support shelves, tops and similar items along the upright column (1).

## Claims

1. A supporting structure for partitions, shelves and similar items, comprising the following basic components:
- a tubular column (1) with circular section, which internally features longitudinal profiles delimiting a central duct (2) with circular section, connected with four regularly spaced radial grooves (3) open to the exterior of the column (1), each of them laterally bordered by two separators (4 and 5), connected in the back by a small wall (6), forming a sort of box-shaped track (7) with rectangular section on the back of the opening (3a) of the groove (3); - a shaped strip (11) whose rear part features a wing (10) capable of exactly engaging with one of the grooves (3) of the column (1) and whose front part features attachment means for partitions; **characterised in that** each of said grooves (3) features, in deeper position than the box-shaped track (7), a semicircular niche (8) with the concavity facing the inside of the groove (3), obtained thanks to the special shape of the separator (4) that delimits each groove (3) on the left side when viewed, in use, in elevation; it being provided that the rear wing (10) of the strip (11) has an appendix with crescent-shaped section, which section has an internal horn (10a) longer than an external horn (10b) in order to form a sort of semicircular niche (12) along the entire length of the strip (11); it being furthermore provided that the shape and size of the rear wing (10) are such that, when the external horn (10b) touches the small bottom wall (6) of the corresponding groove (3), the semicircular niche (12) is exactly located in front of the corresponding semicircular niche (8) delimited by the separator (4) of the groove (3), creating with it a longitudinal circular duct (13);
- a pin (20) with circular section capable of being exactly inserted into the longitudinal duct (13) formed inside each groove (3) of the column (1), thanks to the co-operation between the circular niche (8) on the separator (4) of the groove (3) and the semicircular niche (12) on the rear wing (10) of the strip (11).

2. A structure according to claim 1, **characterised by** the fact that the strip (11) frontally features a profile (14) with C-shaped section, intended to exactly house and hold the longitudinal border of partitions.

3. A structure according to claim 1, **characterised by** the fact that the strip (11) frontally features a profile (15) with trident section, with a shorter central horn (15a) shaped like a hook; it being provided that the profile (15) can house the longitudinal border of a partition so that the central horn (15a) can be inserted and fitted in it.

4. A structure according to claim 1, **characterised by** the fact that it features a large stand (30) to guarantee the stable vertical position of the column (1), from which stand (30) a central pin (31) with circular section protrudes vertically, capable of being exactly inserted into the bottom section of the central circular duct (2) of the column (1).

5. A structure according to claims 1 and 4, **characterised by** the fact that four vertical pins (20) with reduced height relative to the central pin (31) protrude from the stand (30), capable of being exactly inserted into the bottom sections of the four ducts (13) formed inside the four grooves (3) of the column (1).

6. A structure according to claim 1, **characterised by** the fact that it has a lid (32) used to exactly close the upright column (1) on top, provided in its lower part with a central pin capable of being exactly inserted into the top section of the central duct (2) of the column (1) and with four peripheral pins, capable of being exactly inserted into the four ducts (13) formed inside the four grooves (3) of the column (1).

7. A structure according to claim 1, **characterised by** the fact that the box-shaped tracks (7) located in the back of the opening (3a) of the four grooves (3) of the column (1) can exactly house and securely fix plates of known type capable to support brackets, pins or other traditional means used to support shelves, tops and similar items along the upright column (1).

## Patentansprüche

1. Ausrüstung für die Halterung von Trennwänden, Konsolen und ähnlichem, welche folgende Basiskomponenten umfasst:
• eine rohrförmige Säule (1) mit runden Querschnitt, in deren Innenraum einige längsverlaufende Profile vorgesehen sind, die eine zentrale Leitung (2) mit ebenfalls rundem Querschnitt bilden, die mit vier radialen, in regelmäßigem Abstand voneinander stehenden Rillen (3) verbunden sind, die sich zum Äußeren der Säule (1) hin öffnen und jeweils seitlich durch zwei Scheidewände (4 und 5) begrenzt sind, die rückwärtig mittels einer kleinen Wand (6) verbunden und so geformt sind, dass auf der Rückseite der Öffnung (3a) der Rille (3) eine Art kastenförmige Schiene (7) mit rechteckigem Querschnitt bilden; eine Profilleiste (11), die hinten mit einem Flügel (10) versehen ist, der in der Lage ist, sich exakt in eine der zuvor genannten Rillen (3) der Säule (1) einzuschieben und vom mit Mitteln zum Einhängen einer Trennwand versehen ist; welches Werkzeug **dadurch gekennzeichnet ist, dass** jede der genannten Rillen (3) an tieferer Position als die kastenförmige Schiene (7) eine halbkreisförmige Nische (8) mit einer Einwölbung in Innere der Rille (3) aufweist, die mittels angemessener Formung der Scheidewand (4) erzielt wird, die jede Rille (3) - von oben gesehen - auf der linken Seite begrenzt, wobei vorgesehen ist, dass der rückwärtige Flügel (10) der Leiste (11) einen Fortsatz mit einem halbmondförmigen Querschnitt aufweist, welcher Querschnitt ein weiter innen gelegenes Horn (10a) besitzt, welches länger als ein weiter außen gelegenes Horn (10b) ist, so dass eine Art halbkreisförmige Nische (12) über die gesamte Länge der Leiste (11) hinweg entsteht; wobei außerdem vorgesehen ist, dass die Form und die Abmessungen dieses rückwärtigen Flügels (10) dergestalt sind, dass beim Anschlagen seines weiter außen gelegenen Horns (10b) an der kleinen Bodenwand (6) der entsprechenden Rille (3) seine halbkreisförmige Nische (12) sich genau gegenüber der entsprechenden halbkreisförmige Nischen (8) befindet, die von der Scheidewand (4) der jeweiligen Rille (3) begrenzt wird und auf diese Weise zusammen mit der Rille eine runde Längsleitung (13) bildet;
• ein Stift mit rundem Querschnitt (20), der dazu dient, sich genau in die besagte Längsleitung (13) einzuschieben, die sich im Innem einer jeden Rille (3) der Säule (1) dank des Zusammenwirkens der halbkreisförmigen, auf der Scheidewand (4) der Rille (3) entstehenden Nische (8) und der auf dem rückwärtigen Flügel (10) der Leiste (11) entstehenden, halbkreisförmigen Nische (12) gebildet wird.

2. Werkzeug gemäß Anspruch 1, **dadurch gekennzeichnet, dass** die Leiste (11) vom ein Profil (14) aufweist, welches einen "C"-förmigen Querschnitt besitzt, der dazu dient, die Längskante einer Trennwand exakt aufzunehmen und zu halten.

3. Werkzeug gemäß Anspruch 1, **dadurch gekennzeichnet, dass** die Leiste (11) vom ein Profil (15) aufweist, welches einen dreigezahnten Querschnitt mit einem kürzeren mittleren Horn (15a) besitzt, welches die Form einer Sperrklinke aufweist, wobei vorgesehen ist, dass dieses Profil (15) dazu dient, den Längsrand einer Trennwand aufzunehmen, so dass der genannte mittlere Profilarm (15a) sich darin einschieben und diese festhalten kann.

4. Werkzeug gemäß Anspruch 1, **dadurch gekennzeichnet, dass** es sich zur stabilen Stützung der Säule (1) in vertikaler Position eines breiten Sockels (30) bedient, aus welchem vertikal ein zentraler Bolzen mit rundem Querschnitt (31) hervorsteht, der dazu dient, sich exakt in den Basisabschnitt der mittleren, runden Leitung (2) der Säule (1) einzuschieben.

5. Werkzeug gemäß Anspruch 1 und 4, **dadurch gekennzeichnet, dass** aus dem Sockel (30) vier vertikale Stifte (20) mit einer - bezogen auf den zentralen Bolzen (31) - einer geringen Höhe hervorstehen, welche Stifte dazu dienen, sich exakt in den Basisabschnitt der vier Leitungen (13) einzuschieben, die sich im Innem der vier Rillen (3) der Säule (1) bilden.

6. Werkzeug gemäß Anspruch 1, **dadurch gekennzeichnet, dass** es sich eines Deckels (32) bedient, der dazu dient, die besagte Steigsäule (1) oben zu verschließen, welche unten mit einem zentralen Bolzen versehen ist, der dazu dient, genau in den oberen Abschnitt der zentralen Leitung (2) der Säule (1) einzudringen und welche außerdem mit vier peripheren Stiften versehen ist, die dazu dienen, genau in die vier Leitungen (13) einzudringen, die sich im Innern der vier Rillen (3) der Säule (1) bilden.

7. Werkzeug gemäß Anspruch 1, **dadurch gekennzeichnet, dass** die besagten kastenförmigen Schienen (7), die auf der Rückseite der Öffnung (3a) der vier Rillen (3) der Säule (1) vorgesehen sind, in der Lage sind, Plättchen bekannter Art exakt aufzunehmen und eine stabile Befestigung zu ermöglichen, welche Plättchen dazu dienen, Bügel, Bolzen oder andere, herkömmliche Mittel für die Halterung von Konsolen, Auflageflächen oder ähnlichem entlang der Steigsäule (1) zu tragen.

## Revendications

1. Equipement pour le support de panneaux diviseurs, tablettes et similaires, comprenant les composants de base suivants :
• Une colonne tubulaire (1), ayant section circulaire, à l'intérieur de laquelle sont prévus des profils ayant développement longitudinal qui définissent un conduit central (2), ayant lui aussi section circulaire, relié par le biais de quatre rainures radiales (3), distanciées à intervalles réguliers, qui s'ouvrent à l'externe de la colonne (1) chacune desquelles résultant délimitée latéralement par deux cloisons (4 et 5), reliées postérieurement par le biais d'une petite paroi (6), étant les dites cloisons façonnées de manière à former, sur la face arrière de l'embouchure (3a) de la rainure (3), une sorte de rail en forme de boîte (7) ayant section rectangulaire ; une lame façonnée (11) dotée postérieurement d'une aile (10) en mesure de se loger exactement dans l'une des dites rainures (3) de la colonne (1) et frontalement de moyens d'accrochage pour un panneau diviseur ; équipement **caractérisé en ce que** chacune des dites rainures (3) présente plus en profondeur, par rapport au rail en forme de boîte (7), un logement semi-circulaire (8), dont la concavité est tournée vers l'intérieur de la rainure (3), obtenu en façonnant à cet effet la cloison (4) qui délimite chaque rainure (3) sur le côté gauche, en le regardant en usage et vu du haut ; étant prévu que la dite aile postérieure (10) de la dite lame (11) présente une appendice ayant, en section, la forme d'un croissant, les dites sections ayant une corne plus interne (10a) dont la longueur est majeure par rapport à une corne plus externe (10b) de manière à donner lieu à une sorte de logement semi-circulaire (12) pour toute la longueur de la lame même (11) ; étant également prévu que la forme et les dimensions de dite aile postérieure (10) sont telles que, lorsque sa corne plus externe (10b) s'arrête en butée contre la dite petite paroi de fond (6) de la respective rainure (3), son logement semi-circulaire (12) se dispose exactement en face du correspondant logement semi-circulaire (8) délimité par la cloison (4) de la rainure (3), en créant ainsi avec celle-ci un conduit circulaire longitudinal (13) ;
• Une goupille ayant section circulaire (20) apte à s'enfiler exactement dans le dit conduit longitudinal (13) qui s'est formé à l'interne de chaque rainure (3) de la colonne (1) grâce à la coopération entre le logement semi-circulaire (8) réalisé sur la cloison (4) de la rainure (3) et le logement semi-circulaire (12) réalisé sur l'aile postérieure (10) de la dite lame (11).

2. Equipement selon la revendication 1, **caractérisé en ce que** la dite lame (11) présente frontalement un profil (14) ayant en section une forme en "C" apte à accueillir exactement et à retenir le bord longitudinal d'un panneau diviseur.

3. Equipement, selon la revendication 1, **caractérisé en ce que** la dite lame (11) présente frontalement un profil (15) ayant en section une forme de trident avec la corne centrale (15a), de longueur mineure, façonnée en forme d'harpion ; étant prévu que dit profil (15) est apte à accueillir le bord longitudinal d'un panneau diviseur, de manière que la dite branche centrale façonnée (15a) puisse s'y ficher et y faire prise.

4. Equipement, selon la revendication 1, **caractérisé en ce qu'**il profite, pour le soutien stable en position verticale de la dite colonne (1), d'un grand piédestal (30) duquel forjette verticalement un pivot central ayant section circulaire (31) apte à se loger exactement dans le segment de base du conduit circulaire central (2) de la colonne (1).

5. Equipement, selon les revendications 1 et 4, **caractérisé en ce que** quatre goupilles verticales (20), de hauteur réduite et relatives au pivot central (31) forjettent du dit piédestal (30), étant les dites goupilles en mesure de s'enfiler exactement dans les segments de base des quatre conduits (13) formés à l'intérieur des quatre rainures (3) de la colonne (1).

6. Equipement, selon la revendication 1, **caractérisé en ce qu'**il profite d'un capot (32) apte à fermer supérieurement la dite colonne montante (1), étant ce capot doté inférieurement d'un pivot central apte à pénétrer exactement dans le segment de sommet du conduit central (2) de la colonne (1), ainsi que de quatre goupilles périphériques aptes à pénétrer exactement dans les quatre conduits (13) formés à l'intérieur des quatre rainures (3) de la colonne (1).

7. Equipement, selon la revendication 1, **caractérisé en ce que** les dits rails en forme de boîte (7) prévus sur la face arrière de l'embouchure (3a) des quatre rainures (3) de la colonne (1) résultent en mesure de loger exactement, avec possibilité de fixation stable, des plaquettes du type connu aptes à supporter, le long de la dite colonne montante (1), des brides, des pivots ou autres moyens conventionnels pour le support de tablettes, étagères et similaires.
